(19) Europäisches Patentamt

European Patent Office

Office européen des brevets

(11) Veröffentlichungsnummer: **0 322 621**
**A2**

(12) **EUROPÄISCHE PATENTANMELDUNG**

(21) Anmeldenummer: 88120702.1

(51) Int. Cl.⁴ **B29C 55/16** , //B29L7:00

(22) Anmeldetag: 10.12.88

(30) Priorität: 24.12.87 DE 3744048

(43) Veröffentlichungstag der Anmeldung:
05.07.89 Patentblatt 89/27

(84) Benannte Vertragsstaaten:
**BE FR GB**

(71) Anmelder: **Kampf GmbH & Co.**
**Maschinenfabrik**
**Mühlener Strasse 36**
**D-5276 Wiehl-2, Mühlen(DE)**

(72) Erfinder: **Kampf, Klaus**
**Mühlener Strasse 36**
**D-5276 Wiehl-2, Mühlen(DE)**

(74) Vertreter: **Hassler, Werner, Dr.**
**Postfach 17 04 Asenberg 62**
**D-5880 Lüdenscheid(DE)**

(54) **Simultanbiaxialreckmaschine.**

(57) Eine Simultanbiaxialreckmaschine für thermoplastische Folienbahnen mit an beiden Rändern der Folienbahn angeordneten Fahrschienen, auf denen jeweils zum Einspannen der Ränder der Folienbahn liegende Kluppen auf einem Rollenfahrwerk geführt sind, und mit Transportspindeln, die jeweils in einer Schraubenbahn variabler Steigung die Kluppen mitnehmen, sowie mit Transportvorrichtungen zum Transport der Kluppen mit konstanter Geschwindigkeit. Das technische Problem ist die Bereitstellung einer Simultanbiaxialreckmaschine, bei der die Schraubenbahn der Transportspindel mit einem vergleichsweise geringen Aufwand herstellbar ist. Für jede Schraubenbahn ist mindestens eine Schraubenfeder (13) durch Halter (18) an dem Spindelkörper (14) befestigt.

Fig.2

# Simultanbiaxialreckmaschine

Die Erfindung betrifft eine Simultanbiaxialreckmaschine für thermoplastische Folienbahnen mit an beiden Rändern der Folienbahn angeordneten Fahrschienen, auf denen jeweils zum Einspannen der Ränder der Folienbahn liegende Kluppen auf einem Rollenfahrwerk geführt sind, und mit Transportspindeln, die jeweils in einer Schraubenbahn variabler Steigung die Kluppen mitnehmen, sowie mit Transportvorrichtungen zum Transport der Kluppen mit konstanter Geschwindigkeit.

Eine Vorrichtung dieser Art ist aus der DE-PS 28 53 817 bekannt. Bei dieser Simultanbiaxialreckmaschine sind die Schraubenbahnen in den Spindelkörper eingeschnitten. Nach Herstellung der Transportspindel mit den eingeschnittenen Schraubenbahnen ist eine Änderung der Steigung nicht mehr möglich. Wenn man aus irgendwelchen Gründen mit einer anderen Steigung arbeiten will, so muß man neue Transportspindeln in die Simultanbiaxialreckmaschine einbauen. Ein Austausch von Transportspindeln zur Änderung des Reckprogrammes ist mit praktisch vertretbarem Aufwand nicht möglich. Entsprechendes gilt auch, wenn eine Transportspindel infolge Verschleiß oder aus anderem Grund ausgetauscht werden muß. Die Bearbeitung der Schraubenbahn durch Fräsen ist im übrigen ein außerordentlich arbeitsaufwendiger Vorgang.

Aufgabe der Erfindung ist die Bereitstellung einer Simultanbiaxialreckmaschine, bei der die Schraubenbahn der Transportspindel mit einem vergleichsweise geringen Aufwand herstellbar ist.

Diese Aufgabe wird nach der Erfindung dadurch gelöst, daß für jede Schraubenbahn mindestens eine Schraubenfeder durch Halter an dem Spindelkörer befestigt ist.

Die Erfindung unterscheidet sich insofern vom Stand der Technik, als die Schraubenfeder als Anbauteil auf den Spindelkörper aufgesetzt ist. Diese Schraubenfeder ist ein Verschleißteil, das leicht ausgetauscht werden kann. Außerdem läßt sich die Schraubenfeder jederzeit schnell verstellen, so daß die Steigung verändert werden kann.

Damit die Mitnehmerrollen der Kluppen in beiden Richtungen geführt sind, ist vorgesehen, daß jede Schraubenbahn zwei parallel zueinander angeordnete Schraubenfedern aufweist.

Zur sicheren Einstellung der Schraubenfeder ist vorgesehen, daß der Spindelkörper mehrere Längsnuten zur Aufnahme der Halter aufweist.

Eine sichere Festspannung der Halter wird dadurch erreicht, daß die Längsnuten als T-Nuten ausgebildet sind und daß jeweils ein Nutenstein einen Halter aufnimmt.

Eine genaue Einstellung der Halter auf die Steigung der Schraubenfeder wird dadurch erreicht, daß an der Stirnseite jeder Nut eine ebene Anlagefläche an dem Spindelkörper ausgebildet ist und daß der Halter gegenüber dem Nutenstein verdrehbar ist.

Die Einspannung der Schraubenfeder wird dadurch erleichtert, daß jeder Halter zwei Backen mit je einer segmentförmigen Aufnahme zur Halterung der Schraubenfedern aufweist.

Eine Mitnahme der Kluppen unabhängig von deren Teilung wird dadurch sichergestellt, daß die Transportvorrichtung bandförmig ausgebildet ist und daß jede Kluppe eine Klemmvorrichtung zur kraftschlüssigen Festklemmung an dem Band aufweist. Das Band kann ein flaches Band, ein Stahlband, ein Flechtband, ein Draht oder eine anders ausgebildete bandförmige Anordnung sein.

Eine besonders stabile und einfache Ausbildung des Transportmittels erreicht man dadurch, daß als Band ein Seil vorgesehen ist.

Die Festhaltung der Kluppen wird derat gesteuert, daß die Spannvorrichtung als Hebel ausgebildet ist, der außerdem eine Rolle aufweist, die auf einem Führungsprofil läuft.

Ausführungsformen der Erfindung werden im Folgenden unter Bezugnahme auf die anliegenden Zeichnungen erläutert, in denen darstellen:

Fig. 1 eine schematische Gesamtansicht einer Simultanbiaxialreckmaschine,

Fig. 2 eine Draufsicht auf eine Transportspindel,

Fig. 3 einen Längsschnitt durch eine Transportspindel,

Fig. 4 einen Querschnitt durch eine Transportspindel,

Fig. 5 eine Teildarstellung einer Kluppe mit einer ersten Ausführungsform einer Spannvorrichtung,

Fig. 6 eine Seitenansicht zu Fig. 5,

Fig. 7 einen Schnitt durch eine weitere Ausführungsform einer Spannvorrichtung und

Fig. 8 eine Seitenansicht zu Fig. 7.

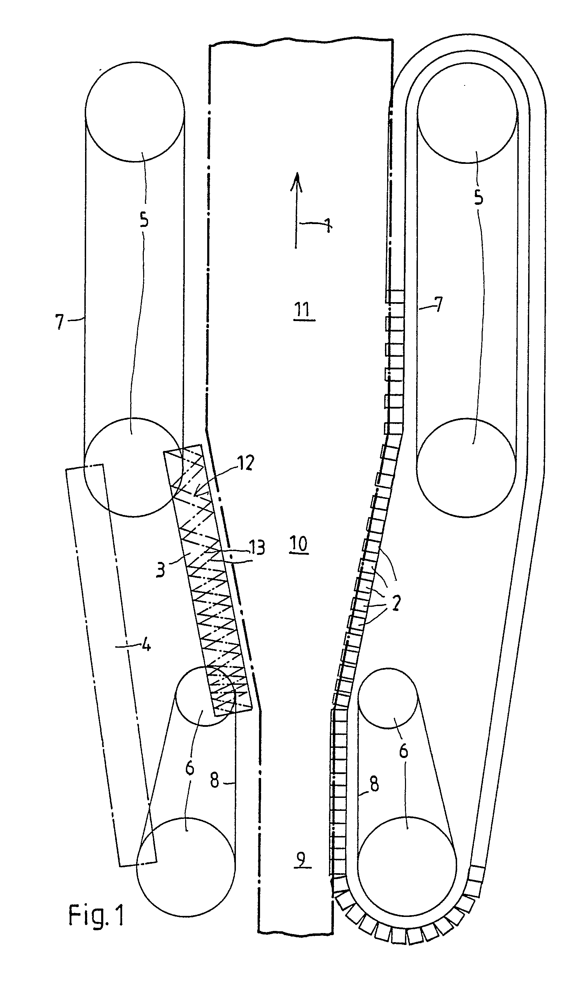

Die in Fig. 1 dargestellte Simultanbiaxialreckmaschine ist auf einem nichtdargestellten Maschinengestell aufgebaut. Symmetrisch zu einer Transportrichtung 1 der Folie sind Kluppenführungsbahnen für Kluppen 2 angeordnet. Die Kluppenführungsbahnen umfassen nicht dargestellte Führungsschienen mit Umlenkführungen, Transportspindeln, insbesondere Reckspindeln 3 und Rücktransportspindeln 4 sowie mehrere über Umlenkräder 5 bzw. 6 geführte Seile 7, 8 als Transportvorrichtungen für eine konstante Geschwindigkeit der Kluppen. In der Zeichnung sind diese Transportmittel sowie die Kluppen nur schematisch und auch nur teilweise dargestellt, damit die Übersichtlichkeit der Zeichnung nicht leidet.

Der Antrieb der Simultanbiaxialreckmaschine erfolgt durch einen Antriebsmotor über eine nicht dargestellte Hauptwelle und Getriebe.

Eine ungereckte Thermoplastfolie wird in einer Einlaufzone 9 eingeführt und an beiden Längsrändern von den Kluppen 2 erfaßt und gehalten. In einer anschließenden Reckzone 10 wird die Folienbahn simultan in Längsrichtung und Querrichtung gereckt. Die Folienbahn gelangt schließlich in eine Fixierzone 11.

Die Kluppen müssen in den verschiedenen Zonen jeweils im Sinne der Verfahrensführung bewegt werden, also in der Einlaufzone 9 mit konstanter Geschwindigkeit, in der Reckzone 10 divergent und beschleunigt sowie in der Fixierzone 11 wieder im wesentlichen mit konstanter Geschwindigkeit, die jedoch größer als die Geschwindigkeit in der Einlaufzone 9 ist.

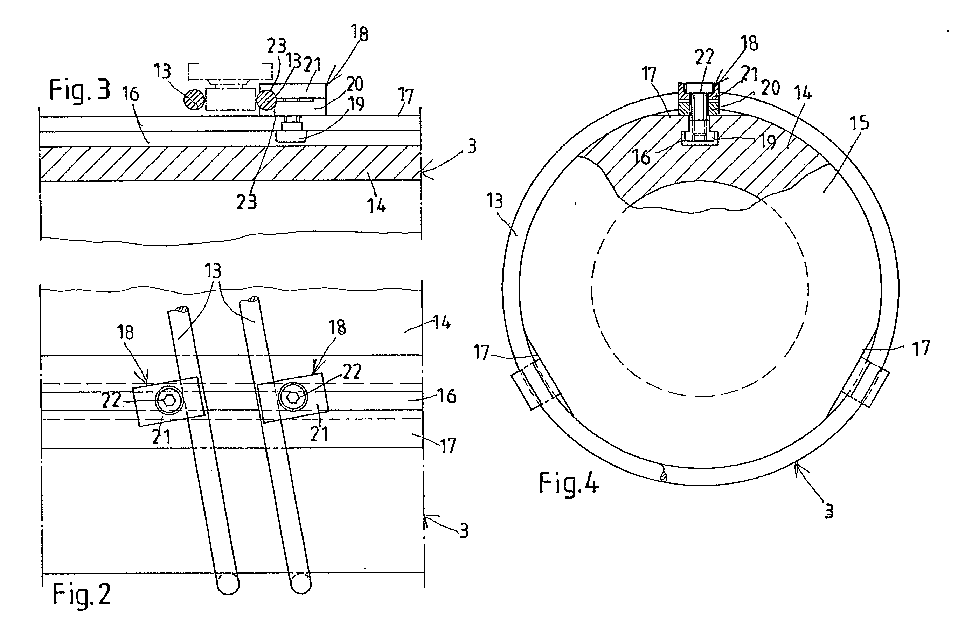

Jede Reckspindel 3 weist eine Schraubenbahn 12 mit variabler Steigung auf. Insbesondere ist in der Reckzone eine progressive Steigung vorgesehen. Der Grad der Steigungszunahme kann jedoch unterschiedlich sein. Es ist sogar möglich, daß in einzelnen Abschnitten der Reckspindeln die Steigung konstant bleibt oder auch abnimmt. Die Schraubenbahn 12 besteht aus zwei Schraubenfedern 13, die auf dem Mantel der Reckspindel 3 entsprechend der gewünschten Steigung befestigt sind. Jede Schraubenfeder 13 ist zweckmäßigerweise bei der Herstellung vorgeformt. Die Schraubenfedern 13 können bereits mit einer progressiven Steigung vorgefertigt werden, um die Spannungen bei der Montage der Schraubenfedern auf der Reckspindel klein zu halten. Die Anordnung dieser Schraubenfeder auf der Reckspindel ist in den Fig. 2 bis 4 in Einzelheiten dargestellt.

Der Spindelkörper 14 der Reckspindel 3 ist ein zylindrischer Hohlkörper, der an den Stirnenden Abschlußteile 15 mit Lagerzapfen und dergleichen aufweist. Parallel zur Achse des Spindelkörpers 14 sind am Außenumfang mehrere T-Nuten 16 eingearbeitet. Man kann drei bis sechzehn oder noch mehr Nuten vorsehen. Die Stirnflächen der T-Nuten 16 weisen eine ebene Anschnittfläche 17 auf, deren Zweck noch erläutert wird. In den Figuren sind zwei Schraubenfedern 13 dargestellt, die jeweils parallel zueinander auf dem Spindelkörper 14 angeordnet sind.

Ein Halter 18 für die Schraubenfeder 13 umfaßt einen Nutenstein 19 mit einem Innengewinde sowie zwei Backen 20, 21 mit segmentförmigen Aufnahmen 23 für die Schraubenfeder 13. Die Backen 20 und 21 sitzen auf der ebenen Anschnittfläche 17 auf und können gegenüber der Längsrichtung der T-Nut 16 entsprechend der gewünschten Steigung der Schraubenfeder 13 verschränkt werden. Die ebene Anschnittfläche 17 stellt sicher, daß die Backen 20 und 21 in jedem Fall flächig aufliegen. Die Teile des Halters sind durch eine Spannschraube 22 zusammengehalten, die in das Gewinde des Nutensteins 19 eingreift.

In anderer Weise kann man auch die Spannschraube unmittelbar in ein Gewindeloch der Reckspindel 3 einschrauben. In diesem Fall sind keine T-Nuten erforderlich. Dann ist jedoch die Schraubenfeder nicht verstellbar. Diese Anordnung ist also nur in bestimmten Fällen geeignet.

Die Schraubenfedern 13 lassen sich bei der beschriebenen Anordnung jederzeit verändern, so daß die Steigung der Schraubenbahn 12 jederzeit veränderbar ist. Solche Änderungen lassen sich schnell durchführen, wenn das Reckprogramm geändert werden soll.

Jeweils am Ende der Reckspindel muß man Maßnahmen vorsehen, damit bei einer Verstellung der Schraubenfedern kein Überstand derselben entsteht. Man kann die Enden der Schraubenfedern teleskopartig ausbilden. Man kann auch die Schraubenfedern in einen festen Gewindegang einschieben.

Bei einer Veränderung der Steigung der Schraubenbahn ändert sich am Ausgang der Reckspindel die Teilung und die Phase der Kluppen. Infolgedessen kann das nachgeschaltete Transportmittel keine feste Teilung haben. Hier sieht die Erfindung ein Band oder ein Seil als Transportmittel vor, wobei der Begriff Band ein flaches Band, ein Stahl band, ein Flechtband, einen Draht, ein Seil oder eine anders ausgebildete bandförmige Anordnung einschließt.

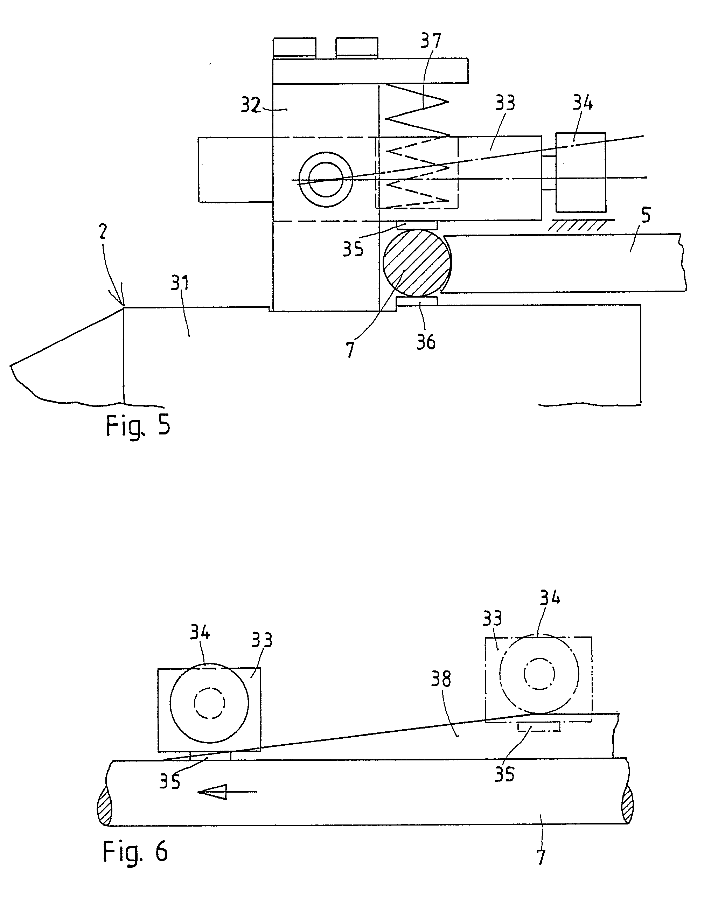

Die Fig. 5 und 6 zeigen den Kopf 31 einer Kluppe 2 sowie das Seil 7, das auch um das Umlenkrad 5 geführt ist. Am Kopf 31 befindet sich ein Steg 32, in dem ein Spannhebel 33 verschwenkbar geführt ist. An dem Spannhebel 33 sitzt eine Rolle 34. Außerdem sitzt an dem Spannhebel 33 eine Klemmbacke 35, die einer Klemmbacke 36 am Kopf 31 der Kluppe 2 gegenübersteht. Eine Schraubendruckfeder 37 spannt den Spannhebel 33 vor.

Das Seil 7 ist auch über die Umlenkrolle 5 geführt. So lange die Kluppe 2 nicht mit dem Seil 7 verspannt ist, läuft die Rolle 34 auf einem Führungsprofil 38, so daß der Hebel 33 angehoben ist. Zum Festspannen der Kluppe 2 an dem Seil 7 läuft die Rolle 34 über einen abfallenden Teil des Führungsprofils 38, so daß sich der Spannhebel 33 absenkt und die Klemmbacken 35 und 36 das Seil 7 zwischen sich einklemmen und so die Kluppe 2 an dem Seil 7 festspannen. Die Kluppe kann so an jeder beliebigen Stelle an dem Seil 7 festgespannt werden. Das Seil 7 kann auch auf die jeweilige Bewegungsgeschwindigkeit der Kluppe eingestellt werden.

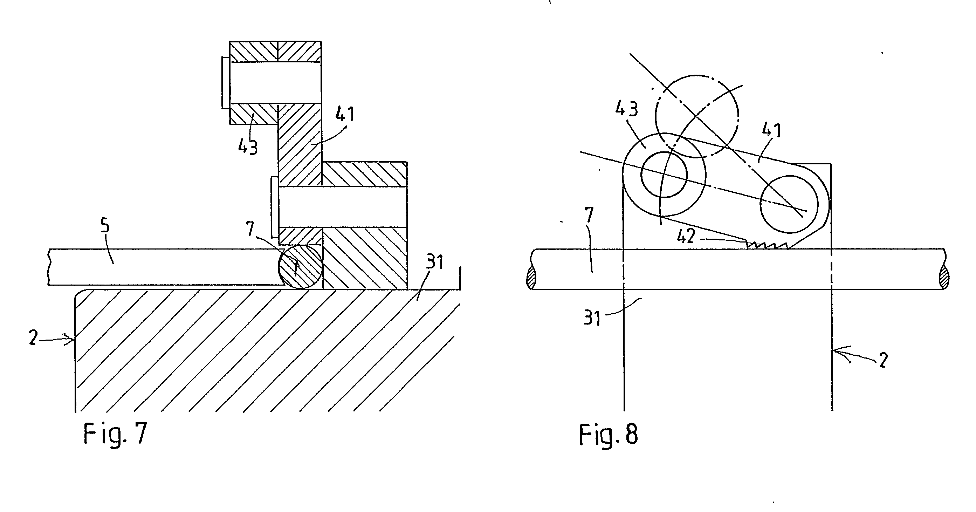

Eine andere Spannvorrichtung ist in den Fig. 7 und 8 dargestellt. Man erkennt dort einen Spannhebel 41 mit einem Spannprofil 42. Dieses Spannprofil 42 arbeitet nach dem System einer Exzenterklemmung. Die Kluppe 2 wird an dem Seil 7 durch den Spannhebel 41 gegen eine Spannfläche des Kopfes 31 der Kluppe 2 gespannt. An dem Spannhebel 41 sitzt eine Rolle 43, die ebenfalls mit einem nichtdargestellten Führungsprofil zusammenwirkt, um das Festspannen der Kluppe an dem Seil 7 zu steuern.

Beim Einsatz eines anderen Bandes, z. B. eines flachen Bandes wird eine ähnliche kraftschlüssig wirkende Spannvorrichtung verwendet.

## Ansprüche

1. Simultanbiaxialreckmaschine für thermoplastische Folienbahnen mit an beiden Rändern der Folienbahn angeordneten Fahrschienen, auf denen jeweils zum Einspannen der Ränder der Folienbahn liegende Kluppen auf einem Rollenfahrwerk geführt sind, und mit Transportspindeln, die jeweils in einer Schraubenbahn variabler Steigung die Kluppen mitnehmen, sowie mit Transportvorrichtungen zum Transport der Kluppen mit konstanter Geschwindigkeit, dadurch gekennzeichnet, daß für jede Schraubenbahn mindestens eine Schraubenfeder (13) durch Halter (18) an dem Spindelkörper (14) befestigt ist.

2. Simultanbiaxialreckmaschine nach Anspruch 1, dadurch gekennzeichnet, daß jede Schraubenbahn zwei parallel zueinander angeordnete Schraubenfedern (13) aufweist.

3. Simultanbiaxialreckmaschine nach Anspruch 1 oder 2, dadurch gekennzeichnet, daß der Spindelkörper (14) mehrere Längsnuten (16) zur Aufnahme der Halter (18) aufweist.

4. Simultanbiaxialreckmaschine nach Anspruch 3, dadurch gekennzeichnet, daß die Längsnuten als T-Nuten (16) ausgebildet sind und daß jeweils ein Nutenstein (19) einen Halter (18) aufnimmt.

5. Simultanbiaxialreckmaschine nach Anspruch 3 oder 4, dadurch gekennzeichnet, daß an der Stirnseite jeder Nut (16) eine ebene Anlagefläche (17) an dem Spindelkörper (14) ausgebildet ist und daß der Halter (18) gegenüber dem Nutenstein (19) verdrehbar ist.

6. Simultanbiaxialreckmaschine nach Anspruch 4 oder 5, dadurch gekennzeichnet, daß jeder Halter (18) zwei Backen (20, 21) mit je einer segmentförmigen Aufnahme (23) zur Halterung der Schraubenfedern (13) aufweist.

7. Simultanbiaxialreckmaschine nach einem der Ansprüche 1 bis 5, dadurch gekennzeichnet, daß die Transportvorrichtung bandförmig ausgebildet ist und daß jede Kluppe (29 eine Klemmvorrichtung zur kraftschlüssigen Festklemmung an dem Band aufweist.

8. Simultanbiaxialreckmaschine nach Anspruch 7, dadurch gekennzeichnet, daß als Band ein Seil vorgesehen ist.

9. Simultanbiaxialreckmaschine nach Anspruch 7 oder 8, dadurch gekennzeichnet, daß die Spannvorrichtung als Hebel (33) ausgebildet ist, der außerdem eine Rolle (34) aufweist, die auf einem Führungsprofil (38) läuft.

Fig. 1

Fig.4

Fig.3

Fig.2

Fig. 5

Fig. 6

Fig. 7

Fig. 8

EP 0 322 621 A2